Europäisches Patentamt

European Patent Office

Office européen des brevets

(19)

(11) Numéro de publication: **0 031 785**
**B1**

(12) **FASCICULE DE BREVET EUROPEEN**

(45) Date de publication du fascicule du brevet:
**30.11.83**

(51) Int. Cl.³: **D 03 D 15/00,** D 03 D 11/00,
B 32 B 5/10, B 29 D 3/02

(21) Numéro de dépôt: **80420148.1**

(22) Date de dépôt: **18.12.80**

(54) Matériau textile complexe pour la réalisation d'articles stratifiés et articles stratifiés réalisés à partir de ce matériau.

(30) Priorité: **21.12.79 FR 7932135**

(43) Date de publication de la demande:
**08.07.81 Bulletin 81/27**

(45) Mention de la délivrance du brevet:
**30.11.83 Bulletin 83/48**

(84) Etats contractants désignés:
**AT CH DE GB IT LI NL SE**

(56) Documents cités:
**FR - A - 2 034 787**
**GB - A - 780 978**
**US - A - 2 836 529**
**US - A - 3 914 494**

(73) Titulaire: **J. BROCHIER ET FILS (Société Anonyme),
70, cours Tolstoi, F-69100 Villeurbanne (FR)**

(72) Inventeur: **Micheaux, Dominique, 18, rue des Pins,
F-38230 Villette d'Anthon (FR)**
Inventeur: **Palmer, Raymond J., 515 Kings Place,
Newport Beach, CA 92663 (US)**

(74) Mandataire: **Laurent, Michel et al, Bureaux Chalin
A1 20, rue Louis Chirpaz Boîte Postale 32,
F-69130 Lyon-Ecully (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

Matériau textile complexe pour la réalisation d'articles stratifiés et
articles stratifiés réalisés à partir de ce matériau

La présente invention concerne un nouveau type de matériau textile complexe utilisable pour la réalisation d'articles stratifiés; elle concerne également les articles stratifiés réalisés à partir d'un tel matériau.

Les matériaux stratifiés sont connus depuis fort longtemps et sont constitués par une alternance de couches de matières textiles (tissus, non tissés ...) que l'on imprègne de résine, l'ensemble étant ensuite traité thermiquement afin de provoquer la polymérisation de la résine et le durcissement. Ces matériaux ont trouvé de nombreuses applications, soit sous la forme d'éléments plans (plaques), soit sous la forme d'éléments conformés obtenus par moulage, notamment dans le bâtiment, l'automobile, la marine, l'aéronautique ...

De tels complexes ont tout d'abord été réalisé à partir de mats ou de tissus de verre.

Récemment, sont apparus sur le marché des fils, désignés couramment par l'expression »fils à haut module«, qui présentent des caractéristiques mécaniques et physiques nettement supérieures aux fils de verre, tels que par exemple les fils de bore ou les fils de carbone, ces derniers étant obtenus par traitement thermique d'une matière fibreuse organique, par exemple de fibres cellulosiques ou acryliques. A l'origine, compte-tenu du fait que ces fils étaient difficiles à travailler sur un métier à tisser, ils étaient utilisés, pour la réalisation d'un stratifié, sous la forme de bandes constituées de fils parallèles préimprégnés de résine. Lors de la réalisation du stratifié, l'utilisateur superposait les bandes ainsi réalisées en les entrecroisant éventuellement, de manière à obtenir de bonnes caractéristiques mécaniques dans toutes les directions. De telles nappes de filaments présentaient cependant l'inconvénient d'être difficiles à manipuler et à stocker.

Pour surmonter ces inconvénients, il a été proposé, notamment dans le brevet français n° 2 156 505 (correspondant au brevet des Etats-Unis d'Amérique 3 997 697) de réaliser un tissu industriel complexe comportant une chaîne très lâche, constituée par des fils quelconques, notamment par des fils chimiques, ayant pour fonction de donner de la cohésion à une trame extrêmement dense dont les fils sont constitués par des fils de bore.

En ce qui concerne les fils de carbone, la même évolution a été constatée et il a été également envisagé de réaliser des tissus dont la chaîne (ou la trame) est formée de nappes de fils de carbone, tordus ou non, formant une nappe de filaments parallèles, dense et homogène, la cohésion de ces fils étant donnée par des fils de trame (ou de chaîne), tissés lâche ou non, en carbone ou toute autre matière chimique.

Un tel matériau est décrit notamment dans la demande de brevet français n° 2 034 787. Dans ce document, par ailleurs, il est prévu et ce essentiellement dans un but d'économie, un matériau pouvant comporter des mèches de fibres de carbone et des paquets de fibres de verre pouvant être alternés comme éléments de chaîne.

Après préimprégnation avec une résine appropriée, le stratifié est réalisé, comme antérieurement, en superposant une pluralité de tissus, éventuellement en donnant une orientation différente aux nappes les unes par rapport aux autres.

Si lesdits stratifiés à base de filaments de carbone présentent des caractéristiques mécaniques élevées (tant à la flexion, qu'à la traction, qu'à la compression), ainsi qu'une très grande rigidité, ils ont cependant un inconvénient, que l'on ne constatait pas dans les stratifiés à base de fils de verre, à savoir qu'en cas de chocs, il se produit parfois des criques ou fissures qui sont la conséquence du haut module de ces types de fils, c'est-à-dire de leur faible pouvoir d'allongement élastique.

Par ailleurs, l'implantation de corps étrangers dans de tels stratifiés, tels que par exemple l'application de rivets, de charnières, est délicate à réaliser. En effet, lors de cette implantation, la solution classique consiste à percer le stratifié en des points déterminés. Or les orifices ainsi réalisés créent des zones de moindre résistance qui diminuent considérablement les caractéristiques mécaniques de l'ensemble du stratifié.

Or, on a trouvé, et c'est ce qui fait l'objet de la présente invention, un noveau type de matériau textile complexe, constitué au moins pour partie de filaments présentant un module élevé (carbone par exemple) qui, d'une part, diminue les risques de formation de criques ou fissures dans les articles stratifiés réalisés à l'aide de ce matériau et, d'autre part, permet l'implantation de rivets charnières ..., sans altérer de façon notable les caractéristiques mécaniques d'ensemble dudit matériau stratifié.

D'une manière générale, le matériau textile complexe selon l'invention pour la réalisation d'articles stratifiés est du type constitué par une pluralité de couches superposées d'un tissu formé pour partie de filaments à haut module (carbone par exemple) et il se caractérise par le fait que lesdits fils à haut module sont disposés, du moins dans une couche, sous forme de bandes de largeur régulière ou non, disposées dans au moins une direction du tissu (chaîne et/ou trame) séparées entre elles par des bandes de fils qui ont un module inférieur au fil précité (c'est-à-dire présentant un pouvoir d'allongement élastique supérieur), la superposition desdites couches de tissu étant réalisée de telle sorte que les bandes de fil à bas module forment des zones, s'étendant sur toute l'épaisseur de l'empilement, constituées uniquement par de tels fils à bas module.

De préférence, les bandes de fils à bas module auront une largeur faible par rapport à la largeur des bandes de fils à haut module.

Dans la suite de la description, l'invention sera décrite plus particulièrement en utilisant comme fils à haut module des fils de carbone et comme fils à bas module des fils de verre mais il est bien entendu que cela n'est pas limitatif. En général l'invention peut être mise en oeuvre en utilisant deux types de fils ayant un pouvoir d'allongement élastique différent, les moins élastiques étant désignés par l'expression »fils à haut module« et étant avantageusement à base de carbone et des fils présentant un pouvoir d'allongement élastique supérieur aux fils précités étant désignés par l'expression »fils à bas module« et étant par exemple constitués par des fils à base de verre, de polyamide . . .

Dans un mode de réalisation de l'invention, les fils à haut module et les fils à bas module sont disposés dans une seule direction du tissu (chaîne ou trame) l'autre direction (trame ou chaîne) étant tissée lâche, jouant le rôle de fils de liage, et étant choisis parmi les fils chimiques fins, souples, de manière à obtenir un tissu dans lequel les fils à haut module et les fils à bas module sont maintenus de manière rectiligne.

Dans la suite de la description, et par mesure de simplification, on décrira essentiellement des matériaux tissés complexes conformes à l'invention, dont seule la chaîne est constituée pour partie majoritaire de filaments à haut module (carbone par exemple), disposés sous forme de bandes régulières séparées entre elles par des fils à bas module (verre) ces dernières ayant de préférence une largeur nettement inférieure aux bandes de fils à haut module. Il est évident que cela n'est pas limitatif et que l'invention couvre également des articles tissés complexes dont à la fois la chaîne et la trame sont constituées par une alternance de bandes de fils à haut module et de bandes de fils à bas module, que des articles dont seulement une direction, par exemple la chaîne serait constituée de telles bandes, la trame étant constituées en totalité de fils à haut module, voire même d'articles tissés en biais, c'est-à-dire dont la chaîne et la trame ne sont pas orientées orthogonalement par rapport à la longueur du tissu.

Par ailleurs, si les bandes de fils à haut module et à bas module ont de préférence la même épaisseur sur toute la largeur du tissu, il peut également être envisagé de réaliser des articles textiles complexes conformes à l'invention constitués de tissus dans lesquels les bandes de fils à bas module auraient une épaisseur supérieure aux bandes de fils à haut module.

Avantageusement, le pourcentage de fils à bas module, c'est-à-dire, dans les exemples donnés ci-après, de fils de verre, par rapport aux fils à haut module (carbone par exemple) sera compris entre 8 et 20% par rapport au poids total du matériau. Par ailleurs, on a constaté que l'on obtenait de bons résultats en réalisant un tissu dont la chaîne est constituée par des bandes de fils à haut module ayant une largeur comprise entre 3,5 centimètres et 8 centimètres, et des bandes de fils à bas module ayant une largeur comprise entre 0,5 centimètres et 1 centimètre.

Il est évident que les limites données précédemment ne sont pas limitatives et, qu'en fonction des caractéristiques désirées et des applications envisagées il peut être possible de modifier la proportion entre les fils à bas module et les fils à haut module.

Dans le mode de réalisation préférentiel de l'invention, mode dans lequel, comme dit précédemment, seule la chaîne est constituée par une telle alternance de fils à haut module et de fils à bas module, la trame étant constituée de fils de liage tissés lâche, ou utilisera de fils de liage tissés lâche, on utilisera de préférence des fils de liage choisis parmi les fils chimiques tels que le verre, le polyester, les fils aramides . . ., la densité de liage étant avantageusement voisine de 4 coups par centimètre.

Comme résine permettant l'imprégnation d'un tel matériau tissé complexe en vue de réaliser des articles stratifiés, on utilisera de la résine conventionnelle thermodurcissables, telle que par exemple les résines epoxy, polyimide, polyester . . ., la seule précaution à prendre résidant dans le choix du produit d'ensimage pour les fils à bas module et les fils à haut module, ces produits d'ensimage devant être compatibles avec la résine utilisée. De plus, lors de la réalisation de l'article stratifié proprement dit, le matériau textile complexe conforme à l'invention sera de préférence obtenu au moyen de tissus préalablement imprégnés.

La superposition des différentes couches de tissus pour réaliser un matériau textile selon l'invention sera réalisée de telle sorte que les bandes de fils à bas module (fils de verre par exemple) forme, dans le stratifié réalisé, des zones s'étendant sur toute l'épaisseur de l'empilement et constituées uniquement par de tels fils à bas module. Cette superposition sera avantageusement faite en entrecroisant, soit à angle droit, soit dans des angles différents les différentes couches de tissus conformes à l'invention.

Grâce à un tel matériau complexe, on a constaté que, du fait de la présence de fils à bas module (fils de verre) on évitait la formation de criques dans le stratifié formé ou, dans le cas extrême, empêchait la propagation d'une telle crique en la limitant entre deux bandes consécutives en fils à bas module. Par ailleurs, il a même été constaté, de manière surprenante, que certaines caractéristiques, par exemple de résistance à la traction pouvaient dans certains cas se trouver améliorées par rapport à un matériau stratifié similaire réalisé en totalité à partir de fils à haut module.

L'invention et les avantages qu'elle apporte seront cependant mieux compris grâce aux exemples de réalisation donnés ci-après à titre indicatif mais non limitatif et qui sont illustrés par les figures annexées dans lequelles:

— la figure 1 illustre schématiquement en perspective un tissu permettant de réaliser un matériau complexe conforme à l'invention,

— la figure 2 illustre également en perspective un matériau textile complexe selon l'invention dans lequel les différentes couches de tissu sont entrecroisées à angle droit,

— la figure 3 illustre en perspective un matériau stratifié réalisé en superposant une pluralité de couches de tissu, les couches étant décalées de 45° les unes par par rapport aux autres,

— la figure 4 est une vue schématique de dessus d'un matériau réalisé conformément à la figure 3 et qui montre plus en détail la zone de superposition des fils à bas module, zone dans laquelle on pratique un orifice,

— la figure 5 illustre schématiquement en perspective un tissu permettant la réalisation d'un matériau conforme à l'invention dans lequel à la fois la chaîne et la trame sont constituées par une alternance de bandes de fils à haut module et de bandes de fils à bas module,

— la figure 6 illustre en coupe transversale un tissu dans lequel les bandes de fils de nature différente ont la même épaisseur,

— la figure 7 illustre également en coupe transversale un tissu dans lequel les bandes de fils à bas module ont une épaisseur supérieure aux fils à haut module.

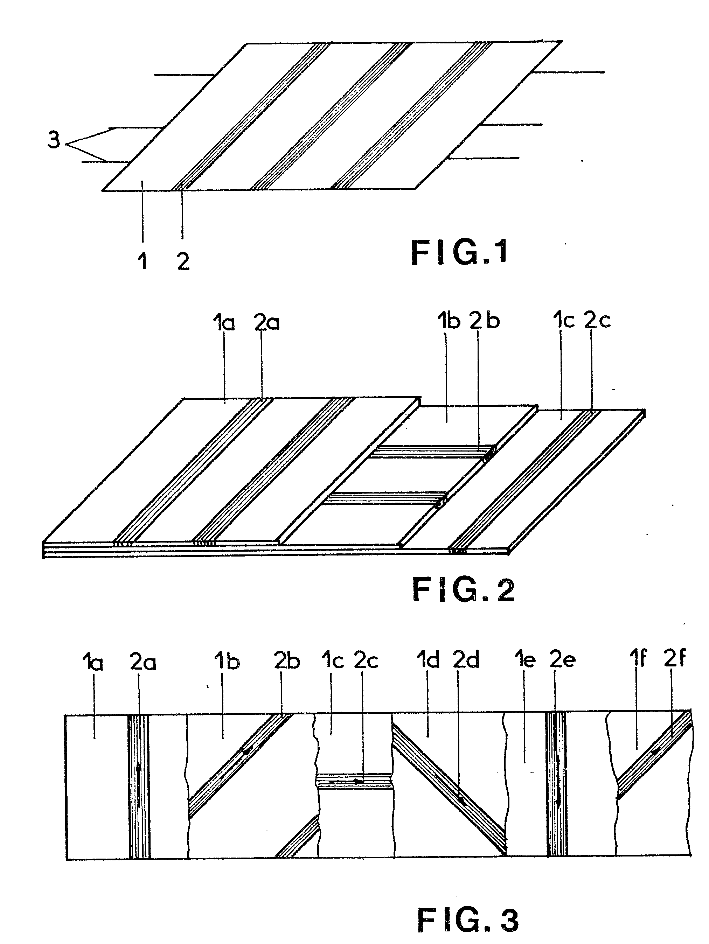

Dans les figures 1 à 5 qui précèdent, et ce afin de les rendre plus claires, seuls les fils à bas module ont été schématisés, l'entrecroisement des fils les uns par rapport aux autres n'étant pas représenté.

### Exemple

Sur un métier à tisser classique, on réalise un matériau tissé permettant de réaliser un complexe conforme à l'invention, ce tissu ayant les caractéristiques suivantes:

En chaîne:
— Fils à haut module: constitués de fils de carbone, référence T300 — type 40B de la société TORAY. Chaque fil est constitué de 3000 filaments et ne comporte aucune torsion,
— fils à bas module: verre type E ayant une torsion 80 tours par mètre et un titre global de 272 tex.

Comme cela est illustré à la figure 1, la chaîne est constituée d'une alternance de bandes 1, 2, régulières, les unes 1 formées de 40 fils à haut module (carbone) du type précité, de manière à réaliser une bande ayant 50 millimètres de largeur et les autres 2 étant constituées de quatre fils à bas module (verre) permettant de réaliser une bande de 5 millimètres de largeur.

Le peigne utilisé sur le métier à tisser donne une densité de 8 fils par centimètre.

En trame:
on utilise des fils de verre 3 de 34 tex/2 (retordus à 80 tours par mètre).

Le tissage est réalisé de manière à avoir une densité en trame de liage 3 de 4 coups par centimètre.

L'armure de tissage est une armure taffetas.

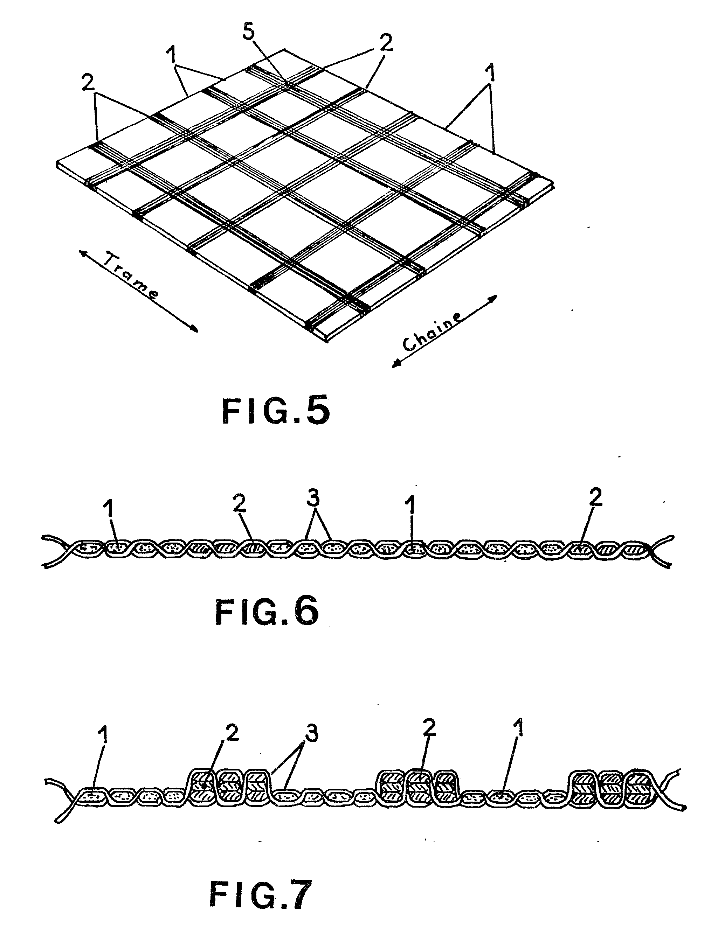

A la tombée du métier, le tissu pèse 160 grammes par mètre carré et a une épaisseur sensiblement constante sur toute sa largeur tel que cela est illustré en coupe à la figure 7.

Après imprégnation à l'aide résine appropriée, telle que par exemple de la résine Vicotex 108 de la Société BROCHIER, ou d'une résine équivalente, cette imprégnation étant réalisée à un taux de 42%, et polymérisation conventionelle on obtient un pli ayant une épaisseur de 150 microns.

Un tel matériau permet de réaliser, ainsi que cela est représenté schématiquement sur les figures 2 et 3 des articles textiles complexes constitués d'une pluralité de couches superposées.

Dans ces figures les mêmes références ont été utilisées pour les différents plis constituant le complexe, ces plis étant différenciés uniquement par une lettre de référence (a, b, c . . .).

Dans l'article stratifié illustré par la figure 2, les différents plis sont superposés à angle droit les uns par rapport aux autres ce qui permet de former, dans les zones où les fils à bas module (2a—2b—2c) se croisent, un matériau ne comportant que de tels fils sur toute son épaisseur. Dans ces zones, il est possible de pratiquer des perforations, par exemple pour implanter des rivets, les caractéristiques mécaniques d'ensemble ne se trouvant pas altérées.

Par ailleurs, on a constaté que les fils à bas module évitaient, ou du moins limitaient, la formation de criques.

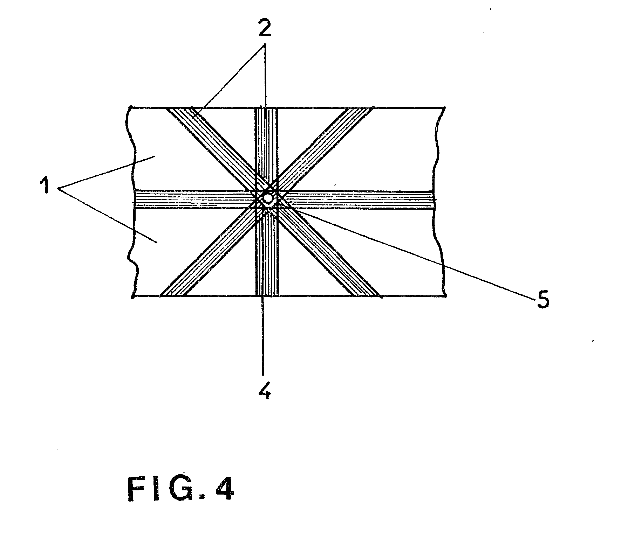

Les figures 3 et 4 illustrent en vue de dessus un article stratifié constitué d'une pluralité de couches superposées en les décalant de 45° les unes par rapport aux autres. Il est également possible, ainsi que cela est illustré à la figure 4, de percer le matériau pour réaliser un orifice 4, permettant par exemple l'implantation d'un rivet, dans les zones 5 constitués uniquement de fils à bas module.

Des essais de résistance à la traction, effectués sur des éprouvettes élaborées et testées selon la norme ASTM D 3039 ont montré, dans le cas où l'on utilisait un matériau tel que celui illustré à la figure 4 dans lequel on avait pratiqué un orifice 4 ayant un diamètre de 3,2 mm, que, par rapport à un article stratifié similaire mais constitué en totalité de fils de carbone, que la résistance à la rupture du stratifié 100% carbone se trouvait diminuée d'environ 10% par rapport à un article stratifié similaire ne comportant pas d'orifice alors que, dans le cas d'un article stratifié réalisé conformément à l'invention tel que décrit précédemment, cette résistance à la rupture n'était pas diminuée.

Cela montre bien les avantages apportés par l'invention, et notamment dans le cas où des implantations, par exemple de rivets, doivent être réalisées dans le stratifié, que l'on ne détériore pratiquement pas les caractéristiques mécaniques de celui-ci. Par ailleurs, on a constaté que l'on améliorait également sensiblement la résistance aux chocs du stratifié par rapport à un stratifié réalisé entièrement à partir de fibres de carbone. De même, on élimine pratiquement tout risque de formation de criques, ou, our le moins, on limite le développement de ces criques et la formation de fissures à une zone comprise entre deux bandes consécutives à base de fils à bas module.

Bien entendu, les exemples qui précèdent ne limitent pas la portée de l'invention qui couvre également toutes les variantes réalisées dans le même esprit. Comme déjà dit, on ne sort pas de l'invention en augmentant ou en diminuant la largeur des bandes de fils à haut module par rapport à celles à base de fils à bas module et/ou en réalisant des bandes présentant des largeurs différentes les unes par rapport aux autres, et/ou en réalisant un tissu constitué à la fois en chaîne et en trame d'une alternance de telles bandes, un tel tissu étant représenté à la figure 5.

Il pourrait également être envisagé, tel que cela est représenté à la figure 7, de réaliser un tissu dans lequel l'alternance des bandes en fils à haut module 1 aurait une épaisseur inférieure à celle des fils à bas module 2.

Enfin, pour certaines applications, il pourrait être envisagé de superposer les couches de tissu comportant une telle alternance de bandes de fils à haut module et de bandes de fils à bas module non pas en les entrecroisant mais en les superposant parallèlement les unes aux autres.

## Revendications

1. Matériau textile complexe pour la réalisation d'articles stratifiés du type constitué par une pluralité de couches superposées d'un tissu tissé formé en partie de filaments à haut module, caractérisé par le fait que les fils à haut module sont disposés, au moins dans une couche, sous la forme de bandes (1) disposées selon au moins un direction du tissu, séparées entre elles par des bandes (2) à base de fils ayant un module inférieur aux fils précités, lesdites couches textiles étant superposées les unes aux autres de telle sorte que les bandes (2) de fils à bas module forment des zones (5) s'étendant sur toute l'épaisseur de l'empilement et constituées uniquement par de tels fils à bas module.

2. Matériau textile selon la revendication 1, caractérisé par le fait que les bandes (2) de fils à bas module ont une largeur inférieure aux bandes (1) de fils à haut module.

3. Matériau textile selon l'une des revendications 1 et 2, caractérisé par le fait que la superposition des couches de tissu est réalisée en les entrecroisant les unes par rapport aux autres.

4. Matériau textile selon l'une des revendications 1 à 3, caractérisé par le fait que dans chaque couche de tissu, les fils à haut module et les fils à bas module sont disposés dans une seule direction du tissu, l'autre direction étant tissé lâche et jouant le rôle de fils de liage (3), ces fils de liage étant choisis parmi les fils chimiques fins, souples, de manière à obtenir un tissu dans lequel les fils à haut module et les fils à bas module sont maintenus sensiblement de manière rectiligne.

5. Matériau textile complexe selon l'une des revendications 1 à 3, caractérisé par le fait que dans chaque couche de tissu la chaîne et la trame sont constituées par des bandes de fils à haut module et de fils à bas module.

6. Matériau textile complexe selon l'une des revendications 4 et 5, caractérisé par le fait que dans chaque couche de tissu, les bandes de fils de haut module (1) ont une largeur comprise entre 3,5 centimètres et 8 centimètres et que les bandes de fils à bas module (2) ont une largeur comprise entre 0,5 centimètre et 1 centimètre.

7. Matériau textile complexe selon l'une des revendications 1 à 6, caractérisé par le fait que les fils à bas module sont des fils de verre et que les fils à haut module sont de fils de carbone.

8. Matériau textile complexe selon l'une des revendications 1 à 7, caractérisé par le fait que le pourcentage de fils à bas module est compris, par rapport au poids total du matériau entre 8% et 20%.

9. Matériau textile complexe selon la revendication 4, caractérisé par le fait que les fils de liage sont choisis parmi les fils de verre, de polyester, d'aramide, la densité de liage étant voisine de 4 coups par centimètre.

10. Matériau textile complexe selon l'une des revendications 1 à 9, caractérisé par le fait que les bandes (2) de fils à bas module ont une épaisseur supérieure aux bandes (1) de fils à haut module.

11. Article stratifié constitué par une résine renforcée par un matériau selon l'une des revendications 1 à 10.

## Patentansprüche

1. Zusammengesetztes Textilmaterial zur Herstellung von Schichtstoffen, das aus mehreren übereinanderliegenden Lagen eines zum Teil aus Hochmodul-Filamenten bestehenden Gewebes gebildet ist, dadurch gekennzeichnet, daß die Hochmodulfäden mindestens in einer Lage in Form von in mindestens einer Richtung des Gewebes liegenden Streifen (1) angeordnet sind, die voneinander durch Streifen (2) auf der Basis von Fäden mit niedrigerem Modul getrennt sind, wobei diese textilen Lagen derart übereinandergelegt sind, daß die Streifen (2) aus Fäden mit niedrigem Modul Zonen (5) bilden, die sich über die ganze Dicke der Schichtung erstrecken und ausschließlich aus Fäden mit niedrigem Modul gebildet sind.

2. Textilmaterial nach Anspruch 1, dadurch gekennzeichnet, daß die Breite der Streifen (2) aus Fäden mit niedrigem Modul geringer ist als die Breite der Streifen (1) aus Hochmodulfäden.

3. Textilmaterial nach Anspruch 1 oder 2, dadurch gekennzeichnet, daß die Gewebelagen einander kreuzend überlagert sind.

4. Textilmaterial nach einem der Ansprüche 1 bis 3, dadurch gekennzeichnet, aaß in jeder Gewebelage die Hochmodulfäden und die Fäden mit niedrigem Modul in einer einzigen Richtung des Gewebes angeordnet sind, während die andere Richtung locker gewebt ist als Verbindungsfäden (3), wobei die Verbindungsfäden aus feinen, nachgiebigen Chemiefäden ausgewählt sind, derart, daß ein Gewebe erhalten wird, in dem die Hochmodulfäden und die Fäden mit niedrigem Modul im wesentlichen geradlinig gehalten sind.

5. Zusammengesetztes Textilmaterial nach einem der Ansprüche 1 bis 3, dadurch gekennzeichnet, daß in jeder Gewebelage die Kette und der Schuß aus Streifen aus Hochmodulfäden und Streifen aus Fäden mit niedrigem Modul bestehen.

6. Zusammengesetztes Textilmaterial nach Anspruch 4 oder 5, dadurch gekennzeichnet, daß in jeder Gewebelage die Streifen aus Hochmodulfäden (1) eine Breite zwischen 3,5 cm und 8 cm und die Streifen aus Fäden mit niedrigem Modul (2) eine Breite zwischen 0,5 cm und 1 cm haben.

7. Zusammengesetztes Textilmaterial nach einem der Ansprüche 1 bis 6, dadurch gekennzeichnet, daß die Fäden mit niedrigem Modul Glasfäden und die Hochmodulfäden Kohlefäden sind.

8. Zusammengesetztes Textilmaterial nach einem der Ansprüche 1 bis 7, dadurch gekennzeichnet, daß der Anteil an Fäden mit niedrigem Modul zwischen 8 und 20% des Gesamtgewichts beträgt.

9. Zusammengesetztes Textilmaterial nach Anspruch 4, dadurch gekennzeichnet, daß die Verbindungsfäden ausgewählt sind aus Glas-, Polyester- oder Aramidfäden und die Dichte der Verbindung etwa 4 Schüsse pro Zentimeter beträgt.

10. Zusammengesetztes Textilmaterial nach einem der Ansprüche 1 bis 9, dadurch gekennzeichnet, daß die Streifen (2) aus Fäden mit niedrigem Modul eine größere Dicke aufweisen als die Streifen (1) aus Hochmodulfäden.

11. Schichtstoff, bestehend aus einem Harz, das durch ein zusammengesetztes Textilmaterial nach einem der Ansprüche 1 bis 10 verstärkt ist.

**Claims**

1. Complex textile material for making stratified products of the type comprising a plurality of stacked layers of woven material formed in part of high modulus fibers, characterized by the fact that said high modulus fibers are disposed, at least in a layer, under the form of strips (1) extending in at least one direction of the woven, separated from each other by strips (2) of lower modulus fibers, said textile layers being superimposed one over the other so that the strips (2) of low modulus fibers are forming zones (5) made up of only low modulus fibers and extending in all the thickness of the stacking.

2. Textile material according to the claim 1, characterized by the fact that the strips (2) of low modulus fibers are narrower than strips (1) of high modulus fibers.

3. Textile material according to one of the claims 1 and 2, characterized by the fact the superimposition of layers of woven is realized by crossing said layers to each other.

4. Textile material according to one of the claims 1 to 3, characterized by the fact that in each layer of woven, the high modulus fibers and the low modulus fibers extend in a single direction of said woven, the other direction being woven of a loosely manner and function as tie yarns (3), said tie yarns being selected among the thin, supple chemical yarn in order to have a woven in which the high modulus fibers and the low modulus fibers are maintained essentially rectiline.

5. Complex textile material according to one of the claims 1 to 3, characterized by the fact that in each layer of woven the warp and the weft are formed of strips of high modulus and low modulus fibers.

6. Complex textile material according to one of the claims 4 and 5, characterized by the fact that in each layer of woven, strips of high modulus fibers (1) have a width ranging between 3,5 cm and 8 cm and strips of low modulus fibers (2) have a width ranging between 0,5 cm and 1 cm.

7. Complex textile material according to one of the claims 1 to 6, characterized by the fact that the low modulus fibers are fiberglass fibers and the high modulus fibers are carbon fibers.

8. Complex textile material according to one of the claims 1 to 7, characterized by the fact that the pourcentage of low modulus fibers ranges between 8 and 20% relative to the total weight of the material.

9. Complex textile material according to the claim 4, characterized by the fact that the tie yarns are selected among the fibers of glass, polyester, and aramid, the density of said the yarns being about four yarns per centimeter.

10. Complex textile material, according to one of the claims 1 to 9, characterized by the fact that the strips (2) of low modulus fibers are thicker than strips (1) of high modulus fibers.

11. Stratified product constitued by a resine reinforced by a material according to one of the claims 1 to 10.

**FIG.1**

**FIG.2**

**FIG.3**

FIG. 4

FIG.5

FIG.6

FIG.7

11